(19) **Europäisches Patentamt / European Patent Office / Office européen des brevets**

(11) **EP 2 902 103 B1**

(12) **EUROPEAN PATENT SPECIFICATION**

(45) Date of publication and mention
of the grant of the patent:
**03.07.2019 Bulletin 2019/27**

(21) Application number: **14153410.7**

(22) Date of filing: **31.01.2014**

(51) Int Cl.:
**B01J 13/16** *(2006.01)*

(54) **A PROCESS TO PREPARE JANUS PARTICLES WITH POLYMER SHELLS**

VERFAHREN ZUM HERSTELLEN VON JANUSTEILCHEN MIT POLYMERSCHALEN

PROCÉDÉ DE PREPARATION DE PARTICULES DE JANUS DOTÉES DE COQUES EN POLYMÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.08.2015 Bulletin 2015/32**

(73) Proprietor: **Leibniz-Institut für Polymerforschung Dresden e.V.**
**01069 Dresden (DE)**

(72) Inventors:
• **Synytska, Alla**
**01187 Dresden (DE)**
• **Kirillova, Alina**
**01069 Dresden (DE)**

(74) Representative: **Hoefer & Partner Patentanwälte mbB**
**Pilgersheimer Straße 20**
**81543 München (DE)**

(56) References cited:
**WO-A1-2013/050773    CN-A- 102 211 753**
**CN-A- 102 653 580    US-A1- 2012 296 029**

• JIAN ZHANG ET AL: "Surface-Initiated Free Radical Polymerization at the Liquid-Liquid Interface: A One-Step Approach for the Synthesis of Amphiphilic Janus Silica Particles", LANGMUIR, vol. 25, no. 11, 2 June 2009 (2009-06-02), pages 6431-6437, XP055126380, ISSN: 0743-7463, DOI: 10.1021/la9000279

• JIAN ZHANG ET AL: "Bioconjugated Janus Particles Prepared by in Situ Click Chemistry", CHEMISTRY OF MATERIALS, vol. 21, no. 17, 8 September 2009 (2009-09-08), pages 4012-4018, XP055126374, ISSN: 0897-4756, DOI: 10.1021/cm901437n

• DICKSON M. ANDALA ET AL: "Templated Synthesis of Amphiphilic Nanoparticles at the Liquid-Liquid Interface", ACS NANO, vol. 6, no. 2, 28 February 2012 (2012-02-28), pages 1044-1050, XP055126233, ISSN: 1936-0851, DOI: 10.1021/nn202556b

• BERGER S ET AL: "Stimuli-Responsive biocomponent polymer janus particles by Grafting from/Grafting to approaches", MACROMOLECULES, AMERICAN CHEMICAL SOCIETY, US, vol. 41, 23 December 2008 (2008-12-23), pages 9669-9676, XP002615985, ISSN: 0024-9297, DOI: 10.1021/MA802089H [retrieved on 2008-11-21]

• WANG B ET AL: "Janus gold nanoparticle with bicompartment polymer brushes templated by polymer single crystals", POLYMER, ELSEVIER SCIENCE PUBLISHERS B.V, GB, vol. 51, no. 21, 14 August 2010 (2010-08-14), pages 4814-4822, XP027321052, ISSN: 0032-3861 [retrieved on 2010-08-14]

• WANG WEIWEI ET AL: "Facile access to cytocompatible multicompartment micelles with adjustable Janus-cores from A-block-B-graft-C terpolymers prepared by combination of ROP and ATRP", COLLOIDS AND SURFACES. B, BIOINTERFACES, vol. 115, 21 December 2013 (2013-12-21), pages 302-309, XP028836547, ISSN: 0927-7765, DOI: 10.1016/J.COLSURFB.2013.12.026

EP 2 902 103 B1

**(Cont. next page)**

- **JIANZHONG DU ET AL: "Anisotropic particles with patchy, multicompartment and Janus architectures: preparation and application", CHEMICAL SOCIETY REVIEWS, vol. 40, no. 5, 8 March 2011 (2011-03-08), page 2402, XP055084593, ISSN: 0306-0012, DOI: 10.1039/c0cs00216j**

**Description**

**Technical field**

The present invention relates to a process for the preparation of Janus particles, and the use of ATRP for the preparation of Janus particles.

**Background of the Invention**

Janus particles are a unique kind of colloidal particles which have different properties on their opposite sides (A. Walther and A. H. E. Müller, Chem. Rev., 2013, published online, DOI: 10.1021/cr300089t.). Due to their bi-phasic character, Janus particles are able to spontaneously self-organize in complex highly ordered structures and orient in bulk (A. Synytska and L. Ionov, Particle & Particle Systems Characterization, 2013, DOI: 10.1002/ppsc.201300146.) at interfaces and are thus particularly interesting for stabilization of emulsions and blends, design of electronic paper and novel functional coatings.

A particularly interesting group of Janus particles comprises the ones specifically responding to a change of environmental conditions. Apparently, grafting of two polymers with different sensitivities on opposite sides can further diversify responsive properties of Janus particles (S. Berger, A. Synytska, L. Ionov, K. J. Eichhorn and M. Stamm, Macromolecules, 2008, 41, 9669-9676.).

When it comes to the synthesis of Janus particles, two important issues need to be addressed. One is the ability to control the geometry of the Janus particles, i.e., the relative areas of their two sides. The other one is the ability to produce Janus particles in large quantities, which is vital for technological applications. So far, various ways to synthesize Janus particles have been developed; however, none of these offers a very good solution to both of these problems.

There are plenty of methods for the design of Janus particles using site-selective modification of particles (J. Hu, S. Zhou, Y. Sun, X. Fang and L. Wu, Chemical Society Reviews, 2012, 41, 4356-4378.), phase separation in block copolymers and polymer blends, site-selective crystal growth, interfacial polymerization (F. Liang, K. Shen, X. Qu, C. Zhang, Q. Wang, J. Li, J. Liu and Z. Yang, Angewandte Chemie International Edition, 2011, 50, 2379-2382.) or micro fluidic jetting.

In these ways, particles with different shape such as spheres, rods and disks can be synthesized. Disk-like or platelet-like particles are particularly interesting. For example, energy of detachment of disk-like particles from the interface between non-miscible liquids is much larger than that of rods or spheres. Therefore, disks (platelets) are expected to be most efficient for stabilization of foams, emulsions and polymer blends.

Kaolinite, which is clay formed by alumosilicate particles with flattened disk-like shape, is extremely abundant in nature. The diameter of kaolinite particles is about 1 - 20 $\mu$m and the height is about 1 $\mu$m. There are only a few reports about preparation and application of kaolinite-based Janus particle.

Fabrication of inorganic silica Janus nanosheets and their Janus performance as a solid surfactant has been described previously (F. Liang, K. Shen, X. Qu, C. Zhang, Q. Wang, J. Li, J. Liu and Z. Yang, Angewandte Chemie International Edition, 2011, 50, 2379-2382.).

Recently, a novel way for synthesis of hybrid disk-like Janus particles using site selective modification of layered-silicate kaolinites at their two opposing basal planes, the tetrahedral (TS) and the octahedral (OS) surface, which were capped by distinct functional groups, has been described (S. Weiss, D. Hirsemann, B. Biersack, M. Ziadeh, A. H. E. Muller and J. Breu, Polymer, 2013, 54, 1388-1396.). The tetrahedral surface was selectively modified by simple cation exchange with poly(2-(dimethylamino) ethyl methacrylate) polycations attached to a polystyrene block while on the octahedral surface PMMA (Poly(methyl methacrylate) chains were covalently anchored via statistically distributed catechol groups. For this, the grafting-to approach was applied.

However, the above-described approach has the problems that the two different surfaces have to be modified one after the other and that the modifications are performed in two different solvent systems. Furthermore, a desirable, high grafting density of the polymers on the kaolinite surfaces cannot be obtained by using the Weiss et al. approach.

Stimuli-responsive bicomponent Janus particles comprising brush polymers were disclosed (S. Berger et al., Macromolecules, 2008, 41, 9669-9676). WO 2013/050773 A1 discloses Janus particles for preventing or reducing crystal growth.

Accordingly, it is an object of the present invention to provide an improved, simple and straightforward process for the preparation of Janus particles which allows producing Janus particles with polymer shells of high grafting density in large quantities.

Furthermore, it is another aspect to provide Janus particles with polymer shells of high grafting densities, though not according to the invention.

## Summary of the Invention

These objects are solved by the aspects of the present invention as specified hereinafter.

According to the first aspect of the present invention, a process for the preparation of Janus particles is provided, comprising the steps of treating a core particle with an aminating agent to introduce amino groups on the surface of the core particle, immobilizing an alkyl halide on the surface of the core particle, providing a solution A comprising a solvent S1 and a monomer M1 which is soluble in said solvent S1, and a solution B comprising a solvent S2 and a monomer M2 which is soluble in said solvent S2, wherein S1 and S2 are not miscible with each other to form a homogeneous solution, preparing an emulsion of said solution A and said solution B with the treated core particle obtained from the step of immobilizing an alkyl halide on the core particle surface, initiating the polymerization of monomer M1 at the surface of the core particle facing solvent S1 and of monomer M2 at the surface of the core particle facing solvent S2, wherein polymerization of the monomers occurs by Atom Transfer Radical Polymerization (ATRP), and separation of the Janus particles.

In a preferred embodiment of the first aspect of the invention, the treated core particle which is added to the emulsion of solution A and solution B is localized at the interface of solution A and solution B before initiation of polymerization is performed.

In another preferred embodiment, the core material has a platelet or disk-like shape.

In another preferred embodiment, the core material is an inorganic material, more preferably the core material is kaolinite.

In yet another preferred embodiment, the value of surface energy of the treated core particle obtained from the step of immobilizing an alkyl halide on the core particle surface is between the values for surface energy of solvent S1 and S2.

In another preferred embodiment, the aminating agent is (3-aminopropyl)triethoxysilane.

In yet another preferred embodiment, the alkyl halide is α-bromoisobutyril bromide.

In another preferred embodiment, S1 and S2 are different in their degree of hydrophilicity.

In yet another preferred embodiment, S1 is more hydrophilic than S2.

In another preferred embodiment, S1 is an aqueous solvent, in particular S1 is water.

In another preferred embodiment, S2 is an organic solvent, in particular S2 is anisole.

In another preferred embodiment, the hydrophilicity of the treated core particle obtained from the step of immobilizing an alkyl halide on the core particle surface is between the degree of hydrophilicity of S1 and the degree of hydrophilicity of S2.

In yet another preferred embodiment, the emulsion obtained in the step of preparing an emulsion of solution A and solution B is an oil-in-water emulsion.

In another preferred embodiment, initiating the polymerization of monomer M1 and initiating the polymerization of monomer M2 takes place in the same emulsion.

Disclosed but not claimed is a first aspect wherein a Janus particle obtainable by the process according the first aspect of the present invention is provided.

Disclosed but not claimed is a second aspect wherein a Janus particle with a polymer shell is provided, wherein one surface of the particle is covered with a different polymer than the other surface.

In the Janus particle according to the second or third aspects the grafted polymers on at least one surface form polymer brush structures, in particular the grafted polymers on both surfaces form polymer brush structures.

In the Janus particle according to the second or third aspects, the average of the grafting densities of the polymers on the two surfaces of the core particle is greater than 0.05 chains/nm$^2$, in particular greater than 0.1 chains/nm$^2$.

In the Janus particle according to the second or third aspects, the grafting density of the polymers on each of the surfaces of the core particle is greater than 0.05 chains/nm$^2$, in particular greater than 0.1 chains/nm$^2$.

Disclosed but not claimed is a fourth aspect wherein the use of the Janus particle according to the second or third aspects is provided for coatings with anti-icing properties.

However, the use of the Janus particle according to the second or third aspects is also provided for coatings with self-healing, anti-soiling, anti-fouling, anti-fogging and/or anti-icing properties.

According to the present invention, the use of Atom Transfer Radical Polymerization (ATRP) for the preparation of Janus particles is provided.

The invention also defines that the Atom Transfer Radical Polymerization (ATRP) of different monomers occurs in the same emulsion at different surfaces of a particle.

Disclosed but not claimed is a sixth aspect wherein the use of an oil/water emulsion for the simultaneous covering of two surfaces of a particle with different polymers is provided.

In a preferred embodiment of the sixth aspect, the oil/water emulsion is an oil-in-water emulsion.

In the sixth aspect the value of surface energy of the particle is between the values for surface energy of the different phases of the emulsion.

In the sixth aspect, preferably the degree of hydrophilicity of the particle is between the degree of hydrophilicity of the different phases of the emulsion.

## Description of Figures

Figure 1 shows a scheme of the large scale synthesis of kaolinite-based Janus particles with dense polymer shells: (A) native kaolinite particles after separation (Atterberg method) and washing; (B) kaolinite particles modified with APS; (C) kaolinite particles modified with ATRP Br-Initiator; (D) emulsion droplets stabilized with premodified Br-kaolinites and representative SEM images of wax colloidosomes prepared thereof; (E) hairy Janus particles with dense polymer shells.

Figure 2 shows TGA curves of pure polymers (A), monocomponent Janus PDMAEMA/Br (sample K-7) and PLMA/Br particles (sample K-5) (B).

Figure 3 shows a graph of the Zeta potential (A) and TGA (B) curves of different Janus particles.

Figure 4 shows results of electron microscopy investigation of kaolinite Janus particles: (A) scanning electron microscopy and (B) cryo-TEM image of PDMAEMA$^{Quat.}$/PLMA-JPs; (C, D) TEM and EELS images of PNIPAM/PLMA Janus particles, the signals of carbon and oxygen appear darker and lighter in grayscale, respectively; (E) TEM image of cut Janus kaolinite particle; (F) intensity profile along the arrow in (E).

Figure 5 shows the site-selective adsorption of poly(acrylic acid)-covered nanoparticles on (a,b) PDMAEMA-PLMA Janus particles and gold nanoparticles on (c) PDMAEMA-PLMA Janus particles and (d) PNIPAM-PLMA Janus particles.

Figure 6 shows atomic force measurements on and topography measurements of PDMAEMA-PLMA Janus particles. (a,b) Force distance curves obtained on pure PLMA and PDMAEMA surfaces, respectively; (c) topography images of Janus particles (d) force-distance surfaces of selected Janus particles.

Figure 7 shows the stabilization of water-oil emulsion by native kaolinites, PNIPAM-PLMA and PDMAEMA-PLMA Janus particles.

Figure 8 shows SEM and TEM images of 5 wt% PMMA-PS Janus particles in a PMMA - PS blend.

## Detailed Description of the Invention

It has been surprisingly found that large scale synthesis of kaolinite-based Janus particles is possible by simultaneously employing a "grafting from" immobilization of hydrophilic and hydrophobic polymers using surface induced ATRP. This allows producing hybrid Janus particles with hairy dense polymer shells in large quantities. The chemical composition, functionality and density of the polymer shell as well as the ratio between the both polymers on opposite sides of the particle can be accurately controlled during the synthesis. The synthesized Janus particles with platelet geometry were successfully applied for the stabilization of emulsions, polymer blend as well as for the preparation of functional coatings with anti-fouling and anti-icing properties.

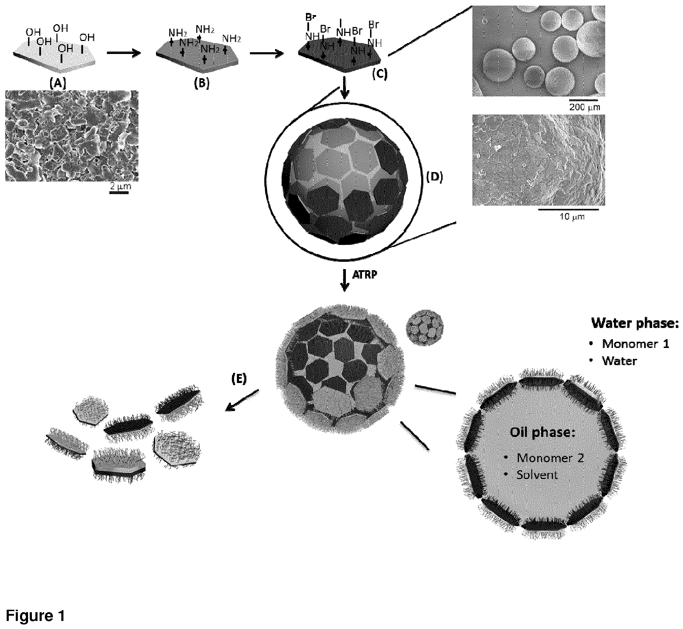

An exemplary process according to the present invention is illustrated in Figure 1. The kaolinite particles (Figure 1A) are first chemically modified in order to provide them with a functionality suitable for initiation of atom-transfer polymerization. To this end, the particles are treated with (3-aminopropyl) triethoxysilane (Figure 1B) to provide free amino groups. In the following step, alkyl bromide groups are immobilized on the free amino groups by treatment of the particles with $\alpha$-bromoisobutyryl bromide (Figure 1C).

Next, an emulsion consisting of a solution of a hydrophilic monomer and a solution of a hydrophobic monomer was prepared to which initiator-modified kaolinite particles were added (Figure 1D). The two solutions should have a difference in surface energy, not be miscible with each other and should thus form a liquid-liquid interface. Furthermore, the premodified kaolinite particle should have a surface energy value between the two solutions and therefore localize at the interface between the two solutions. Due to their flattened shape, the kaolinite-based initiator-modified particles adsorb strongly at the liquid-liquid interface. The particle can readily turn around the axis which goes through their flattened sides, while flipping of the particle is hardly possible because considerable energy excess is required.

In the next step, the hydrophilic and hydrophobic monomers are then polymerized and immobilized on opposite sides of Janus particles when the polymerization was started in both aqueous and non-aqueous phases. In this step, the hydrophilic and/or monomers can be chosen according to the desired use of the Janus particles. A significant advantage of the process of the present invention is that substantially any monomer may be selected which may be polymerized by ATRP. However, the monomers to be polymerized and immobilized on the opposite sides should be selected such that they have a different solubility in the respective phases forming the liquid-liquid interface.

Finally, hairy hybrid Janus platelets with dense polymer shells were obtained (Figure 1E).

Janus particles are amphiphilic colloidal particles that are generally known and described in the literature. Such particles are often referred to as "Janus" particles and may vary in shape, for example, from spherical to egg-like (ellipsoid), "snowman" and dumb-bell (peanut-shaped).

Within the present invention, the term "Janus particles" means an inorganic core particle with a polymer shell wherein the polymeric composition of the polymer shell is different between two different sides of the core particle. According to a preferred embodiment the particle produced by the present invention has a different polymeric composition on opposite sides of the particle. Preferably, the Janus particles are hybrid Janus particles.

The core particles for use in the present invention will generally have a height which is smaller than the length scale of the crystals. Typical lengths of the core particles are from about 1 to about 50 $\mu$m, preferably from 2 to about 20 $\mu$m. Typical heights are about 1 $\mu$m. The ratio of the length of a shape to its height is generally referred to as aspect ratio.

According to a preferred embodiment of the present invention, the aspect ratio of the core particles ranges from 1 to 25, preferably from 2 to 15, more preferably from 5 to 10. If core particles having this aspect ratio are used, they absorb strongly at the liquid-liquid interface and flipping of the particle over the interface is hardly possible. Consequently, each side is only decorated with polymerized monomers soluble in the phase that this side is exposed to. Preferred core particles have a platelet or disk-like shape. Particles having such a shape are usually of a high aspect ratio.

The core particles used preferably consist of an inorganic material, more preferably the material of the core particles is kaolinite. Kaolinite is a clay formed by alumosilicate particles with flattened disk-like shape and is extremely abundant in nature. The particle size of kaolinite for use in the present invention is preferably between 50 nm and 5 $\mu$m, more preferably between 100 nm and 2 $\mu$m. Layered-silicate kaolinites have two opposing basal planes, the tetrahedral (TS) and the octahedral (OS) surface. Preferred core particles consist mainly of kaolinite since this material is easily available for a low price and has high aspect ratios which are both advantageous features for the use in the present invention.

Preferably, the core particles of the desired size are first separated by sedimentation in water for 2 days. Separation may be performed by using grain size separation according to the Atterberg method. The conventional Atterberg method is used for separating grain size fractions according to their settling velocity. After the sample was poured into a sedimentation cylinder, deionized water was added up to the desired settling height. The closed cylinder was shaken until the suspension was homogeneous. When the necessary settling time for a given equivalent diameter (e.g., 2 $\mu$m) was reached (calculated according to Stokes law), the supernatant suspension (e.g., only material <2 $\mu$m) was decanted and dried.

According to another preferred embodiment, the core particles of a defined size are subsequently purified. This may be done by the EDTA method to remove calcium and magnesium carbonates. To this end, the kaolinite particles are stirred in an EDTA solution, washed in water and dried. Preferably, deferration of the particles is conducted via the dithionite-citrate-bicarbonate (DCB) method. To this end, kaolinite particles are stirred in a citrate-bicarbonate solution and then heated in a water bath, after which dithionite was added and the solution further incubated. The thus treated particles are collected by centrifugation washed with the citrate-bicarbonate solution and water, and then dried.

As a first step of the process of the process according to the present invention, ready-to-use kaolinite particles are modified with an aminating agent to introduce amino groups on the surface of the core particle. As aminating agents, any aminating agent may suitably be used in the process of the invention. Preferred examples include aminating agents comprising polylysine or aminoalkylsilanes, such as gamma-aminopropylsilane (GAPS) (e.g., $\gamma$-aminopropyl trimethoxysilane, N-(beta- aminoethyl)-$\gamma$-aminopropyl trimethoxysilane, N-(beta-aminoethyl)-$\gamma$-aminopropyl triethoxysilane or N'-(beta-aminoethyl)-$\gamma$-aminopropyl methoxysilane). A particularly preferred aminating agent is (3-aminopropyl)triethoxysilane (APS). The aminating step may be done by mixing the particles for 7.5% solution of APS in ethanol. The particles are then purified by a centrifugation/redispersion process in ethanol and dried.

As a next step of the process according to the present invention, ATRP initiator groups are immobilized on the particle surface. To this end, alkyl halides are used in the present invention. Preferably, alkyl bromides are used in this step. More preferably, $\alpha$-bromoisobutyril bromide is used as alkyl halide. $\alpha$-bromoisobutyril is preferably immobilized on the particle from its solution in the presence of triethylamine at room temperature under constant stirring for 2 hours. Kaolinite particles are then purified by centrifugation/redispersion in dichloromethane, water and ethanol and dried. As a result of this step, premodified core particles having ATRP initiator groups on their surface are obtained.

As part of the process of the present invention, a solution A comprising a solvent S1 and a monomer M1 which is soluble in said solvent S1 is provided, and a solution B comprising a solvent S2 and a monomer M2 which is soluble in said solvent S2, wherein S1 and S2 are not miscible with each other to form a homogeneous solution, is provided.

According to a preferred embodiment, S1 and S2 have a different degree of hydrophilicity. According to another preferred embodiment S1 is more hydrophilic than S2.

The term "hydrophobic" as used herein refers to the ability of a chemical compound or moiety to be dissolved / dispersed in or interact with fats, oils, lipids, and non-polar solvents or solvents of moderate polarity, such as hexane or toluene.

The term "hydrophilic" as used herein refers to the ability of a chemical compound or moiety to be dissolved / dispersed in or interact with water and other polar substances.

The term "more hydrophilic" as used herein refers to an increased hydrophilic character of one chemical compound or mixture of compounds in comparison to another chemical compound or mixture of compounds. In particular, a chemical compound which is more hydrophilic than a second chemical compound has a higher solubility in water (expressed in g/100g at room temperature) than the second chemical compound.

In order to determine the solubility of a chemical compound in water according to the present invention, any method as known in the art may be employed. An example of such a method is performed as follows: a known amount of water - for example, 100g - is put in a container. Then the substance whose solubility is to be determined is added until, even after vigorous and prolonged stirring (i.e. with a 15 mm stir-bar at 120 rpm for 15 minutes at 20°C), some of that substance does not dissolve in the water.

Such a solution is saturated with the solute once it contains as much dissolved solute as possible at that temperature. In this saturated solution, the amount of dissolved solute corresponds to the solubility of the dissolved substance at the specified temperature in that solvent. In the context of solubility of liquid solvents in water, the amount of the substance exceeding the solubility will form a separate phase to the saturated aqueous solution over time. Examples for the solubility of various solvents in water (expressed in g/100g) are given in Table 1.

Table 1. Solubility of various solvents in water

| Solvent | Solubility in Water (g/100g) |
| --- | --- |
| Heptane | 0.0003 |
| Hexane | 0.001 |
| Pentane | 0.004 |
| Cyclohexane | 0.01 |
| Xylene | 0.018 |
| Toluene | 0.052 |
| Carbon Tetrachloride | 0.08 |
| Trichloroethylene | 0.11 |
| Benzene | 0.18 |
| Diisopropyl Ether | 0.2 |
| n-Butanol | 0.43 |
| 1,2-Dichloroethane | 0.81 |
| Chloroform | 0.815 |
| Dichloromethane | 1.6 |
| Methyl-t-Butyl Ether | 4.8 |
| Diethyl Ether | 6.89 |
| Butyl Acetate | 7.81 |
| Ethyl Acetate | 8.7 |
| 2-Butanone | 24 |
| Isopropanol | soluble |
| Tetrahydrofuran | soluble |
| n-Propanol | soluble |
| Dioxane | soluble |

(continued)

| Solvent | Solubility in Water (g/100g) |
|---------|------------------------------|
| Acetone | soluble |
| Methanol | soluble |
| Ethanol | soluble |
| Acetonitrile | soluble |
| Acetic Acid | soluble |
| Dimethylformamide | soluble |
| Dimethyl Sulfoxide | soluble |
| Water | soluble |

In a preferred embodiment, the solvent or solvent mixture S1 is water or an aqueous solution, or ionic liquid, in particular S1 is water.

In another preferred embodiment, the solvent or solvent mixture S2 comprises an organic solvent, such as trimethylpentane, ethanol, tetrahydrofurane (THF), pentane, cyclopentane, hexane, cyclohexane, benzene, toluene, anisole or other organic solvents known in the art, in particular anisole.

The solvent or solvent mixture S1 is immiscible with the solvent or solvent mixture S2 to form a homogeneous solution. By a solvent or solvent mixture S1 which is immiscible with a solvent or solvent mixture S2 to form a homogeneous solution, it is meant that the mixture of the two is not homogeneous after mixing and settle into separate liquid phases or layers of different composition over time.

According to one embodiment, the degree of hydrophilicity of substances used in the present invention may also be expressed as the value of surface energy of the respective substance.

The surface energy of a liquid may be determined by any of the methods as known in the art (see for example David B. Thiessen, et. al.. "Surface Tension Measurement."Copyright 2000 CRC Press LLC; accessible on http://dsp-book.narod.ru/MISH/CH31.PDF). Preferably, the surface energy of a liquid as used in the present invention is determined directly by using tensiometry or the pendant drops method.

Surface energies of solids cannot be determined directly. It is current state of the art to determine the surface energy of a solid by calculation from contact angle data. Exemplary instructions for the determination of the surface energy of a solid can inter alia be found in "Handbook of Thin Films: Deposition and Processing" by Hari Singh Nalwa, 2002, Academic Press, San Diego, U.S.A.

Accordingly, S1 and S2 preferably have different values of surface energy, more preferably S1 has a higher surface energy than S2. In a preferred embodiment of the present invention, the surface energy of S1 is about 10 mJ/m$^2$ higher than the surface energy of S2, more preferably the surface energy of S1 is about 20 mJ/m$^2$ higher than the surface energy of S2, even more preferably the surface energy of S1 is about 30 mJ/m$^2$ higher than the surface energy of S2.

It is most important that S1 and S2 are not miscible with each other and form a clear liquid-liquid interface between them. Furthermore, the treated core particle should be such that it localizes at the interface of solution A and solution B. To this end, it is preferred that the value of surface energy of the treated core particle obtained in the step of immobilizing an alkyl halide on the surface of the core particle is between the values of surface energy of solvent S1 and solvent S2. If this requirement is fulfilled, the treated core particle will energetically be driven to localize at the interface between S1 and S2.

According to an exemplary embodiment, S1 may have a surface energy of about 70 mJ/m$^2$, S2 of about 30 mJ/m$^2$ (determined by direct measurement) and the treated core particle of about 40 mJ/m$^2$ (calculated from contact angle data).

Within the meaning of the present invention, "soluble" means that more than 0.1 g of a substance are soluble in 100 ml of the respective solvent to form a homogeneous solution, preferably more than 0.5 g are soluble, more preferably more than 1 g are soluble therein. Within the meaning of the present invention, "insoluble" means that less than 0.1 g of a substance are soluble in 100 ml of the respective solvent to form a homogeneous solution, preferably less than 0.05 g are soluble, more preferably less than 0.01 g are soluble therein.

As monomer M1, any monomer may be used which is soluble in solvent S1. According to one embodiment, monomer M1 is soluble in solvent S1 and insoluble in solvent S2. Examples of the monomer M1 which may be used in the present invention are dimethylaminoethyl methacrylate (DMAEMA) or N-isopropylacrylamide (NIPAM). However, other water-soluble monomers or monomers soluble in the respective solvent S1 may also be used.

As monomer M2, any monomer may be used which is soluble in solvent S2. According to one embodiment, monomer M2 is soluble in solvent S2 and insoluble in solvent S1. Examples of the monomer M1 which may be used in the present invention is lauryl methacrylate. However, other water-insoluble monomers or monomers soluble in the respective solvent S2 may also be used.

In the next step of the process according to the present invention, an emulsion of solution A and solution B is prepared with the treated core particle having immobilized alkyl halides on the particle surface. According to one embodiment of the present invention, solution A and solution B are emulsified before the treated core particle is added to the obtained emulsion. According to another embodiment of the present invention, the treated core particle is introduced into solution A before emulsifying with solution B, alternatively the treated core particle is introduced into solution B before emulsifying with solution A.

According to one embodiment, the emulsion obtained from emulsifying solution A and solution B is an oil-in-water emulsion. The term "oil-in-water emulsion" as used herein means an emulsion in which the more hydrophobic phase is the dispersed liquid and the more hydrophilic phase is the continuous phase. According to one embodiment, the dispersed phase forms small droplets inside the continuous phase. According to another embodiment, the more hydrophilic phase is an aqueous solution and the more hydrophobic phase is an organic solvent, in a preferred embodiment the aqueous solution is water, in another preferred embodiment the organic solvent is anisole.

The solutions may be mixed by a screw mixer, high-shear mixer, disperser or other mixing equipment suitable for the mixing step. One example for the mixing step is mixing in an Ultra-Turax mixer (IKA Laboratory Equipment, Staufen, Germany) at 13500 rpm for 2 minutes.

The process of the present invention further comprises a step of initiating the polymerization of monomer M1 at the surface of the core particle facing solvent S1 and of monomer M2 at the surface of the core particle facing solvent S2.

The polymerization of the monomers on the separate surfaces of the core particle facing the respective solvents is preferably initiated concomitantly. According to one embodiment of the process of the present invention, the step of initiating the polymerization of monomer M1 and initiating the polymerization of monomer M2 takes place in the same emulsion.

According to another embodiment of the present invention, the polymerization of the monomers occurs by radical polymerization, in particular the polymerization occurs by Atom Transfer Radical Polymerization (ATRP). ATRP is a technique which is commonly known in the art and its details are readily apparent to the skilled person. Further information may be taken, inter alia, from "Controlled/Living Radical Polymerization: Progress in ATRP", Krzysztof Matyjaszewski, 2009, Oxford Univ Pr, ISBN: 978-0841269958.

As initiator on the side of the core particle facing solvent S1, any initiator may be used which is able to initiate the polymerization reaction and is soluble in solvent S1, preferably α-bromoisobutyric acid is used as an initiator in bulk.

As initiator on the side of the core particle facing solvent S2, any initiator may be used which is able to initiate the polymerization reaction and is soluble in solvent S2, preferably ethyl α-bromoisobutyrate is used as an initiator in bulk.

According to one embodiment, the mixture containing the solvent S1, the monomer M1, the initiator and optionally a catalyst and a reducing agent and the mixture containing the solvent S2, the monomer M2, the initiator and optionally a catalyst and a reducing agent are prepared separately and mixed with the treated core particle to initiate the polymerization of the monomers on the respective surfaces of the treated core particle.

After initiating the polymerization, the polymerization is preferably conducted for 1 to 3 hours, preferably while stirring at a speed of 1100 to 1400 rpm.

According to another embodiment, the polymerization reaction is conducted at a temperature of 60 to 80°C.

The process of the present invention further comprises a step of separating the Janus particles. Preferably, the separation is conducted after the polymerization reaction has terminated. According to one embodiment, the polymerization reaction has terminated when more than 90% of the monomer have been polymerized.

According to another embodiment, the Janus particles are collected by centrifugation and may be washed in different solvents (DMF, toluene, ethanol, water). Any suitable separation method may be used to separate the Janus particles of the present invention from the polymerization solution/polymerization emulsion.

The present invention provides Janus particles obtainable by the process of the present invention. The present invention further provides Janus particles with a polymer shell wherein one surface of the particle is covered with a different polymer than the other surface.

According to one embodiment, the grafted polymers on at least one surface of the particle form polymer brush structures, in particular the grafted polymers on both surfaces form polymer brush structures. Polymer chains are able to form so-called brush structures if they are grafted to a surface with a high grafting density, i.e. if the distance between the grafted polymer chains (grafting points) is lower than the radius of gyration ($R_g$) of grafted polymer coils in $\Theta$ conditions ($R_{g\Theta} \sim 5$ nm; Iyer, K. S. et al., Macromolecules 2003, 36, 6519-6526 and Ionov, L. et al., Langmuir 2005, 21, 8711-8716). According to one embodiment, the grafted polymers are considered to form brush structures if they have a grafting density of 0.1 chains/nm$^2$ or more.

According to one embodiment, the average of the grafting densities of polymers on the two surfaces of the core particle is greater than 0.05 chains/nm$^2$, in particular greater than 0.1 chains/nm$^2$.

According to another embodiment, the grafting density of the polymers on one of the surfaces of the core particle is greater than 0.05 chains/nm$^2$, in particular greater than 0.1 chains/nm$^2$. In particular, the grafting density of the polymers on each of the surfaces of the core particle particle is greater than 0.05 chains/nm$^2$, in particular greater than 0.1 chains/nm$^2$.

This invention further provides but does not claim the use of the Janus particles for coatings with self-healing, anti-soiling, anti-fouling, anti-fogging and/or anti-icing properties, in particular for coatings having anti-icing properties.

The synthesized Janus particle can be successfully applied for the design of coatings with anti-ice properties. There are two main concepts for the design of anti-ice coatings: either to prevent freezing and ice nucleation by the use of hydrophilic materials or polymers) or creating icephobic materials with reduced ice adhesion using hydrophobic and superhydrophobic materials or surfaces. Due to their amphiphilic (hydrophobic/hydrophilic) character, the inventive Janus particles can be used for the design of coatings with hydrophilic and hydrophobic patches, making use of both above-mentioned anti-icing mechanisms.

It was surprisingly found that the temperature at which ice formation begins (freezing point) on hydrophilic surfaces (such as PEGMA or PDMAEMA polymers) and surfaces made of Janus particles (covered with PEGMA/PDMS and PDMAEMA/PLMA) are substantially lower ($T_{f.p.}$ = - 9.5°C) than that of hydrophobic surfaces ($T_{f.p.}$ = - 1.0°C).

On the other hand, adhesion of the ice to hydrophobic surfaces (such as PDMS or PLMA polymers) and to surfaces made of Janus particles (covered with PEGMA/PDMS and PDMAEMA/PLMA) is comparable to each other and clearly lower (about 3 times) than adhesion of ice to hydrophilic surfaces (such as PEGMA or PDMAEMA polymers).

Thus, surfaces made of amphiphilic (hydrophobic/hydrophilic) Janus particles combine low freezing points of hydrophilic polymeric surfaces and low ice adhesion intrinsic to hydrophobic surfaces.

This invention further provides the use of Atom Transfer Radical Polymerization (ATRP) for the preparation of Janus particles. The invention also defines that ATRP of different monomers occurs in the same emulsion at different surfaces of a particle.

An aspect is provided but does not claim the use of an oil/water emulsion for the simultaneous covering of two surfaces of a particle with different polymers. According to this aspect, the oil/water emulsion is an oil-in-water emulsion. According to this aspect, the value of surface energy of the particle is between the values of surface energy of the different phases of the emulsion. According to this aspect, the degree of hydrophilicity of the particle is between the degree of hydrophilicity of the different phases of the emulsion.

All embodiments of the present invention as described herein are deemed to be combinable in any combination, unless the skilled person considers such a combination to not make any technical sense and as long as they fall within the scope of the claims.

## Examples

The materials used in the experimental section are the following:
Ethanol abs. (EtOH, VWR, 99.9%), 3-aminopropyltriethoxysilane (APS, ABCR, 97%), $\alpha$-bromoisobutyryl bromide (Aldrich, 98%), $\alpha$-bromoisobutyric acid (BiBA, Aldrich, 98%), anhydrous dichloromethane (Fluka), triethylamine (Fluka), copper(II) bromide (Aldrich, 99.999%), tin(II) 2-ethylhexanoate (Aldrich, 95%), tris(2-pyridylmethyl)amine (TPMA, Aldrich, 98%), N,N,N',N'',N''-Pentamethyldiethylenetriamine (PMDTA, Aldrich, 99%), *N,N*-dimethylformamide (DMF, Aldrich, 99.8%), ethyl $\alpha$-bromoisobutyrate (EBiB, Aldrich, 98%), toluene (Aldrich, 99.8%), chloroform (Aldrich, 99.8%), paraffin wax (mp 53-57 °C, Aldrich), anisole (Aldrich, 99%), L-ascorbic acid (Aldrich) and N-Isopropylacrylamide (Aldrich, 99%) gold (III) chloride (30 wt.% in dilute HCl, Aldrich) and sodium citrate dehydrate (SAFC) were used as received. Methyl methacrylate (Aldrich) and styrene (Aldrich) were passed through acidic, neutral and basic aluminium oxides prior to the polymerization. Copper (I) bromide (99.999%, Aldrich), tri(n-butyl)tin hydride (97%, Aldrich) and tetrahydrofurane (99.9%, Aldrich) were used as received.

Lauryl methacrylate (LMA, Aldrich), 2-(dimethylamino)ethyl methacrylate (DMAEMA, Aldrich) and oligo(ethylene glycol) methyl ether methacrylate (OEGMA, Aldrich) were filtered prior to the polymerization through acidic, neutral and basic aluminium oxides respectively. Millipore water was obtained from Milli-Q (Millipore). Conductivity: 0.055 $\mu$S/cm.

The following analysis methods were used:

*Scanning Electron Microscopy (SEM).* All scanning electron microscopy (SEM) images were acquired on a NEON 40 EsB Crossbeam scanning electron microscope from Carl Zeiss NTS GmbH, operating at 3 kV in the secondary electron (SE) mode. In order to enhance electron density contrast, samples were coated with platinum (3.5 nm) using a Leica EM SCD500 sputter coater.

*Transmission Electron Microscopy (TEM) and Cryo-TEM.* Transmission electron microscopy (TEM) images and cryogenic TEM images were taken with a Libra 120 cryo-TEM from Carl Zeiss NTS GmbH equipped with a LaB6 source. The acceleration voltage was 120kV and the energy filter with an energy window of 15 eV was used.

The kaolinite JP sample for cryo-TEM was prepared as follows. First, PDMAEMA was stained (quaternized) with $CH_3I$ to enhance the contrast in TEM. Then the JPs were dispersed in water (0.5 mg/ml) by ultrasonication for 20 minutes and left to settle overnight. Prior to the analysis 3.5 $\mu$l of the sample were taken from the upper part, blotted and vitrified in liquid ethane at -178°C. Ultimately, an approx. 200 nm thick ice film was examined in the TEM. Lamellas for TEM investigations were cut from kaolinite samples with a Focused Ion Beam (FIB).

*Atomic Force Microscopy (AFM). Sample preparation for AFM measurements.* Kaolinite particles covered with polymers (JPs) were immobilized onto a PGMA-coated silicon wafer. For this purpose, the wafer was first washed in a mixture of hydrogen peroxide/ammonia hydroxide/water (1:1:1) in order to get a uniform $SiO_2$ layer with silanol groups. PGMA was then spin-coated onto the wafer from a 0.01% solution in $CHCl_3$ in two steps: (1) rpm = 100, time = 11 s, $R/s^2$ = 1900; (2) rpm = 2000, time = 31 s, $R/s^2$ = 1900. Afterwards, the wafer was annealed for 20 minutes at 150°C in a vacuum oven in order to chemically graft PGMA. The obtained PGMA layer thickness was 7 nm. Next, a dispersion of kaolinite JPs was prepared in ethanol (1mg/ml) and a few drops were deposited onto a PGMA-coated wafer. The wafer was again annealed at 150°C for two hours in a vacuum oven. Multilayers were then removed by ultrasonication.

*AFM measurements under water.* Atomic force microscopy images were taken with a Bruker Dimension® Icon™ AFM (Bruker, USA). Contact mode in fluid was used to capture force-distance curves from kaolinite samples. Bruker's Dimension® Icon™ is equipped with ScanAsyst™ automatic image optimization technology, which enables easier, faster, and more consistent results. The ScanAsyst™ option was used for topographical measurements with a $Si_3N_4$ cantilever with a spring constant of 0.7 N/m. For force-distance measurements a $Si_3N_4$ cantilever with a spring constant of 0.02 N/m was used. The "Point & Shoot" option was utilized for kaolinite samples to accurately trigger force measurements at desired locations. In this way, it could always be controlled, from which point the force curve was obtained and to which kaolinite particle (or substrate) it refers. Employing this mode, several (3-4) force curves were obtained from one single kaolinite particle to make sure of their similarity. One of the curves was then taken as a representative curve for the specific particle. Several topographical images of the sample with the respective force curves were taken for each salt concentration or pH value.

Interaction forces were measured in an open fluid cell in a sealed chamber for the AFM at room temperature. Electrolyte solutions have been prepared from 0.1 molar KCl, using 0.1 molar HCl and KOH to adjust the pH value. Thus, measurements were carried out at pH 2, 6 and 10 in DI water and at the same pH values in $10^{-3}$ and $10^{-1}$ molar KCl. The wafer was rinsed with DI water or the electrolyte solution by placing a certain amount of it (approx. 0.5-1 ml) between the sample and the probe holder with a syringe, then removing it with a tissue and placing another portion of the solution (or water). The procedure was repeated at least 3 times and then the sample was left to equilibrate in the solution for 20 minutes. In all measurements, AFM probes were first brought into contact with the substrate. When the AFM cantilever was withdrawn from the contact, the force was measured between the probe and the sample.

*Electrokinetic measurements.* The pH-dependent electrokinetic measurements (via electrophoresis) of the particles in dispersion were carried out with a Zetasizer Nano ZS from Malvern Instruments Ltd. and an MPT-2 autotitrator. For all measurements, the particles were suspended in a solution of $10^{-3}$M KCl in water (10 mg/24 ml or 0.42 mg/ml). The pH of the prepared suspensions was controlled by adding 0.1 M KOH or HCl aqueous solutions. Three measurements were recorded for each sample at each pH value.

*Thermogravimetric Analysis (TGA).* Thermogravimetric analysis (TGA) measurements have been conducted on a TGA Q 5000IR device from TA Instruments Co. The chosen measurement conditions were a temperature span up to 800°C and measurement under air.

*FTIR-ATR Spectroscopy.* FTIR-ATR spectra were taken with an IFS 55 (Bruker, Germany) spectrometer for all prepared systems. Moreover, FTIR-ATR spectroscopy was used for determination of grafted amount of polymer. Details of the calibration procedure are given elsewhere (Berger, S., et al., 2008. Macromolecules 41, 9669-9676). Briefly, the grafted amount was estimated using calibration curves plotted from the absorbency spectra of the samples, made from a mixture of the polymer and particles (50 mg). It was found that FTIR spectra of Janus particles contain characteristic bands of both polymers (for instance): PDMAEMA (at 2850 cm-1) and PLMA (at 2770 cm-1) that is the direct evidence for successful grafting of both polymers. We estimated ratio between two polymers using calibration curve obtained from FTIR spectra of polymer mixture with different composition. It was found that ratio between PDMAEMA and PLMA in Janus particles is PDMAEMA:PLMA = 4.3:5.7 i.e. Janus particles are symmetric.

*Contact Angle Measurements.* Apparent advancing and receding water contact angles were measured by the sessile drop method using a conventional drop shape analysis technique (Kruss DSA 10, Hamburg, Germany). Deionized reagent grade water was used for contact angle measurements. The advancing contact angle $\theta_{adv}$ was measured by supplying the liquid into the drop at constant velocity. When the pump is reversed, the drop volume started to decrease linearly and the receding contact angle $\theta_{rec}$ was measured. Liquid droplets (15 $\mu$L for advancing contact angle and 5 $\mu$L for receding contact angle) were dropped carefully onto the sample surface, and the average value of 3 measurements, made at different positions of the same sample, was adopted as the average values of contact angles of the substrates. All contact angle measurements were carried out at 24 $\pm$ 0.5 °C and relative humidity of 40 $\pm$ 3% which were kept constant.

*Optical Microscopy.* Optical microscopy images were taken with an Olympus BX51 microscope equipped with an Olympus UC30 camera and recorded with an analySIS docu software (Olympus Soft Imaging Solutions GmBH).

Example 1

Preparation of premodified kaolinite particles

Kaolinite particles (Fluka) were used as received without further purification. They were separated by sedimentation in DI water for 2 days. 100 nm - 2 $\mu$m large particles are separated using grain size separation (Atterberg method). To estimate the sand (>63 $\mu$m), silt (2-63 $\mu$m), and clay (<2 $\mu$m) fraction in the cuttings, these fractions were separated by sieving and settling methods (Atterberg method).

The conventional Atterberg method is used for separating grain size fractions according to their settling velocity. After the sample was poured into a sedimentation cylinder, deionized water was added up to the desired settling height. The closed cylinder was shaken until the suspension was homogeneous. When the necessary settling time for a given equivalent diameter (e.g., 2 $\mu$m) was reached (calculated according to Stokes law), the supernatant suspension (e.g., only material <2 $\mu$m) was decanted and dried.

Kaolinite was purified after separation by the EDTA method to remove calcium and magnesium carbonates. Briefly, a certain amount of kaolinite particles was stirred in a 0.1 molar EDTA solution for 2 hours, then collected by centrifugation, washed in water several times via centrifugation/redispersion and dried under vacuum at 60°C. Deferration was conducted via the dithionite-citrate-bicarbonate (DCB) method. In short, a certain amount of kaolinite particles purified by the EDTA method was stirred in a citrate-bicarbonate solution and then heated in a water bath at 75°C, after which dithionite was added in two portions. The mixture was allowed to stir for 10 more minutes and the particles were then collected by centrifugation. Further, the collected particles were washed 3 times in the citrate-bicarbonate solution and 3 times in water, and then dried under vacuum at 60°C.

Purified and dried kaolinite particles were then modified with (3-aminopropyl)triethoxysilane (APS) to introduce amino groups onto the surface. This was done by mixing the particles for 12 hours in a 7.5% solution of APS in ethanol. The particles were then purified by a centrifugation/redispersion process in ethanol for 6 times and dried in vacuum at 60 °C.

The ATRP initiator (a-bromoisobutyril bromide) is immobilized on the particle surface from its solution in dry dichloromethane (0.7 ml Brln in 35 ml DCM) in the presence of triethylamine (1.4 ml). The reaction is carried out at room temperature under constant stirring for 2 hours. Kaolinite particles are then purified by centrifugation/redispersion in DCM, water and ethanol and dried under vacuum.

Example 2

Grafting of Polymers Using Surface-Initiated ATRP for the Preparation of mono- and bi-component Janus particles

The polymerization of two different polymers is done simultaneously in an emulsion formed by oil in the water phase. A water-soluble monomer (for instance DMAEMA, NIPAM or OEGMA) is dispersed in water, copper (II) bromide and N,N,N',N',N''-Pentamethyldiethylenetriamine (PMDTA) are used as a catalyst, $\alpha$-bromoisobutyric acid as an initiator in bulk and ascorbic acid as a reducing agent.

A 2-neck round-bottom flask with initiator-modified kaolinite and the water-soluble ATRP mixture is put in a water bath heated to 70-80°C and continuously purged with Ar during the whole polymerization process. The oil phase ATRP mixture consists of lauryl methacrylate as a water-insoluble monomer, anisole as a solvent, copper (II) bromide and tris(2-pyridylmethyl)amine (TPMA) as a catalyst, ethyl $\alpha$-bromoisobutyrate (EBiB) as an initiator in bulk and tin 2-ethylhexanoate as a reducing agent. This mixture is introduced to the water phase and mixing by a mechanical stirrer is started. The simultaneous ATRPs are conducted for 1-3 hours at 1100-1400 rpm mixing speed. After polymerization the obtained bi-component amphiphilic kaolinite Janus particles are collected by centrifugation and washed in different solvents (DMF, toluene, ethanol, water).

Mono-component kaolinite Janus particles with PDMAEMA and PLMA shells were prepared as described above, the only difference being the absence of one of the monomers. For the synthesis of PDMAEMA/Br JPs, pure anisole was taken as an oil phase, and for the synthesis of PLMA/Br JPs pure water as a water phase.

Kaolinite-based Janus particles with two polymers which have a similar polarity (such as PMMA and PS) were synthesized as follows. First, mono-component Janus particles with PMMA were prepared using the same procedure as for the PLMA/Br mono-component JPs. The acquired particles were washed 8 times in different solvents (toluene, chloroform, THF) and dried under reduced pressure.

A dehalogenation step was then conducted to remove bromine from the grafted particles. PMMA/Br JPs (350 mg) were dispersed in 25 ml of anisole by ultrasonication, followed by the addition of 40 $\mu$l of PMDTA and 23 $\mu$l of EBiB. The mixture was purged with Ar for 40 minutes.

Next, the mixture was degassed by freeze-pump-backfilling with $N_2$ three times. 34 mg CuBr were added via septum and the freeze-pump-backfilling cycle was repeated one more time. The test tube was transferred to an oil bath heated to 100°C and 200 $\mu$l of tri(n-butyl)tin hydride were injected into the mixture with a syringe. The mixture was stirred overnight in the oil bath at 600 rpm. The particles were then collected by centrifugation and washed with anisole and toluene.

After drying the particles, the ATRP-initiator was immobilized onto the uncovered side of the particles using the procedure described above. The second polymer (PS) was then grafted from the initiator-modified side of the kaolinite particles.

For that purpose, dried particles were placed in a test tube, followed by the addition of 6 ml of styrene, 150 $\mu$l PMDTA (0.5 M solution in DMF), 150 $\mu$l CuBr$_2$ (0.1 M solution in DMF) and 0.5 $\mu$l EBiB. The mixture was ultrasonicated and degassed with Ar for 10 minutes. 450 $\mu$l of tin 2-ethylhexanoate were injected into the mixture and it was placed in an oil bath heated to 90°C. The polymerization was continued for 90 minutes at 700 rpm. The particles were collected by centrifugation and washed 8 times in THF.

Fully-covered kaolinite particles were synthesized by using the kaolinite particles modified with the ATRP-initiator and performing the ATRP in a similar way as described for the grafting of PS. PDMAEMA and PLMA were taken as monomers for this purpose and, as a result, kaolinite particles fully-covered with PDMAEMA and fully-covered with PLMA were prepared.

Example 3

Determination of available initiator sites and grafting density

Polymerization of LMA on initiator-modified kaolinite particles using AGRET-ATRP was performed in order to determine the number of available initiator sites and grafting density.

We added a small amount of free initiator in solution and assumed that the molecular weight of polymer obtained in solution is comparable to that of grafted polymer chains. The molecular weight of polymer in solution obtained by GPC was $M_n$ = 76800; $M_w$ =250000g/mol. The amount of grafted polymer was determined by TGA to be 20 wt. %.

The grafted density was determined by considering the surface area of kaolinite particles, which was determined by BET measurements to be $S_{BET}$=22.276 m$^2$/g. The estimated value of grafting density was ca. 0.11 chains/nm$^2$ which is comparable to the previously reported value of grafting density obtained using AGRET-ATRP on SiO$_2$ substrate.

$$\Gamma(chains \, / \, nm^2) = \frac{f_{pol}}{1-f_{pol}} \frac{N_A}{M_n S_{BET}}$$

$$(1)$$

Example 4

Behavior of premodified kaolinite particles at a water-oil interface

This experiment was performed using paraffin as high-melting point oil. The Br-modified kaolinites were mixed with molten paraffin, and the obtained blend was mixed with water and finally cooled down. Use of high-melting point oil allows SEM investigation of kaolinite particles at room temperature. Preparation of colloidosomes was done by the Pickering emulsion approach as described elsewhere (Macromolecules 2008, 41, 9669-9676). Colloidosomes were prepared with kaolinite modified with the ATRP-Initiator to confirm the location of the particles on the wax-water interface.

It was found that paraffin droplets have a spherical shape after cooling to room temperature and crystallization. The surface of obtained paraffin (wax) droplets are fully covered by flattened kaolinite particles (see magnifications of step D, upper right corner of Figure 1). This behavior can fully be explained by considering the surface tension of water, oil and Br-modified particles which are 72 mJ/m$^2$, 28 mJ/m$^2$ and 40 mJ/m$^2$. The surface tension of Br-modified particles is between values of surface tension of liquids and their segregation between liquids is energetically favorable.

Example 5

Characterization and proof of Janus character

For analysis of the Janus character of the inventive particles, thermogravimetric analysis and streaming potential measurements were conducted for mono-competent particles (for comparison) and the inventive particles as described above.

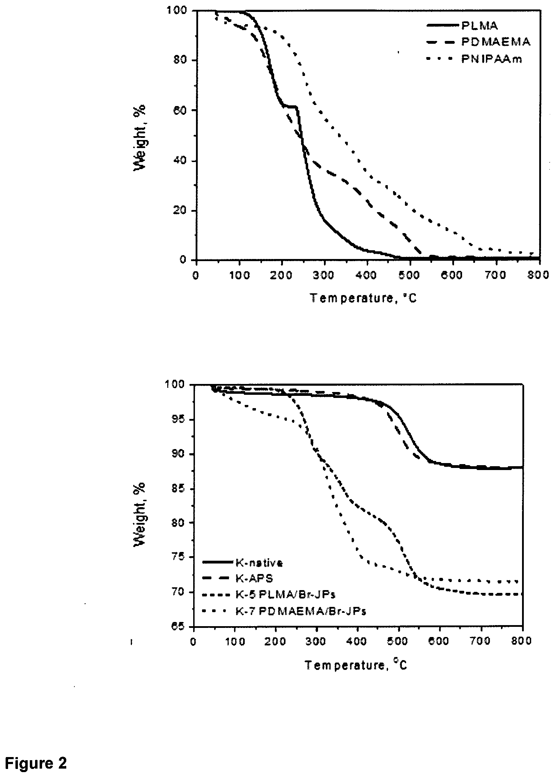

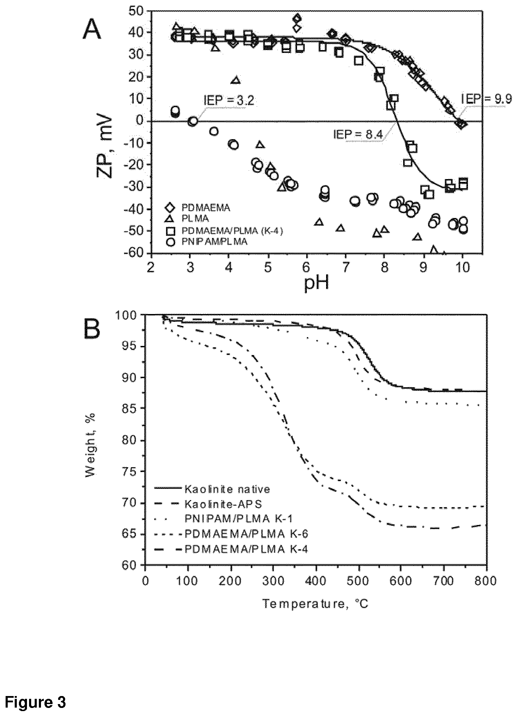

The mass loss, as measured by TGA, for mono-component kaolinite Janus particles with PDMAEMA or PLMA was about 30% in both cases (Figure 2B and 3B). Considering that only half of the kaolinite disks is modified by grafted polymer chains, the thickness of the grafted layers are calculated using the following equation (2) to be about 40 nm.

$$H(nm) = \frac{2f_{pol}}{\rho_{pol}S_{BET}\left(1 - f_{pol}\right)}$$

(2)

The isoelectric point (IEP) of PDAEMA/PLMA Janus particles was found to be at pH 8.4, i.e. between the values of IEP of fully covered particles with the same polymers ($IEP_{PDMAEMA}$ = 9.9; $IEP_{PLMA}$ = 4.4) (Figure 3A). This is an indication of successful grafting of two polymers.

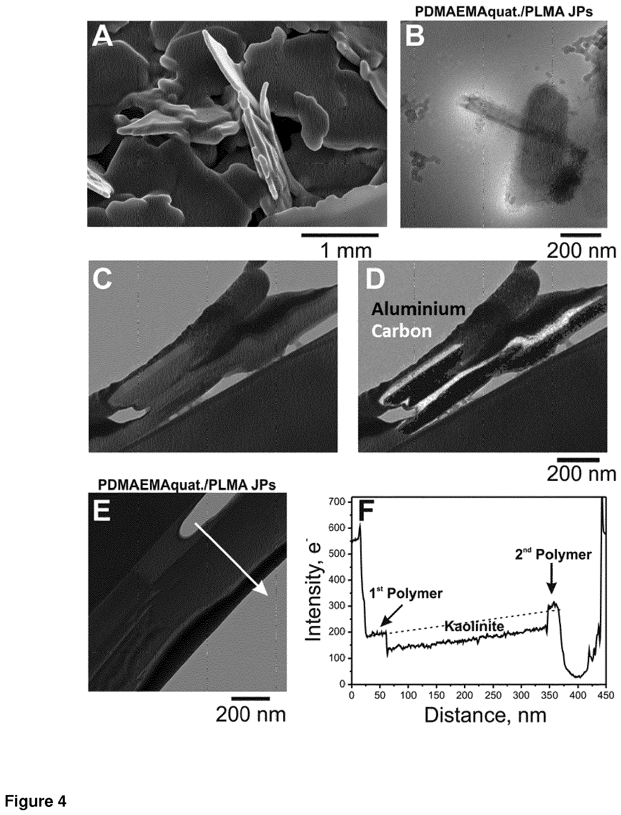

Further microscopic investigation of synthesized Janus particles was carried out in order to prove successful grafting of polymers. The polymer-modified particles have a smoother shape (Figure 4A) than native ones because of the polymer shell. A shell of swollen PDMAEMA in water can also be seen around the PDMAEMA/PLMA Janus particles by using cryo-EM (Figure 4B).

The elemental composition of PNIPAM-PLMA Janus particles was investigated using TEM and EELS method. One can clearly see an oxygen signal, which comes from the inorganic core of the particle (darker in grayscale), and a carbon signal, which comes from the polymer shell (lighter in grayscale; Figure 4C, D). We could also observe a difference between the PNIPAM and PLMA sides (Figure 4E, F).

The thickness of each layer was found to be in the range of ca 30 nm, i.e. comparable to the results of TGA and FTIR. Thus, based on scanning and transmission electron microscopy observation, we can conclude that grafting of polymers to both sides of the kaolinite particles was successful.

Moreover, we further proved the Janus character of synthesized Janus particles by site-selective adsorption of negatively charged PAA-coated $SiO_2$ particles onto Janus particles as well as adhesion measurements. In particular, we observed that PAA-coated $SiO_2$ particles adsorb not on all particles.

Some of the particles remain absolutely uncoated. The observed effect can readily be explained by considering the properties of each polymer. PLMA is hydrophobic and uncharged. PDMAEMA is hydrophilic and positively charged. PAA is hydrophilic and negatively charged. PAA particles are strongly electrostatically stabilized and do not adsorb on any hydrophobic as well as hydrophilic uncharged or negative charged surface.

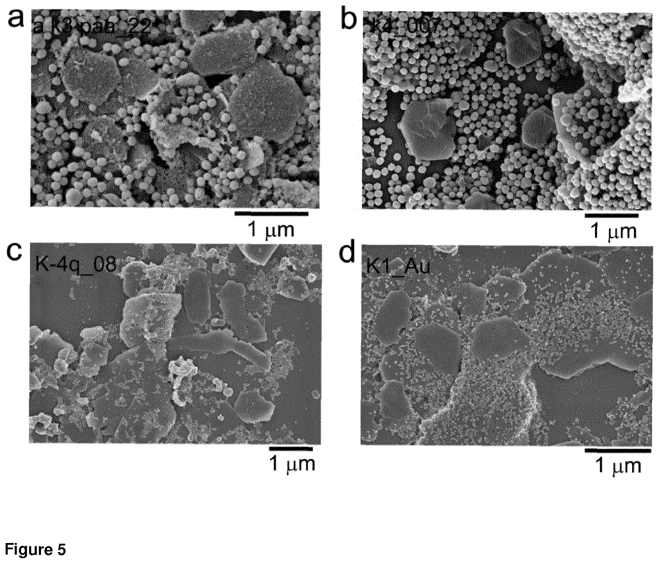

PAA particles are strongly adsorbed on positively charged PDMAEMA surface due to electrostatic attraction. Therefore, the character of adsorption of PAA particles can be considered as an indication of the grafted polymer: PDMAEMA sides of Janus particles are covered by PAA particles, while PLMA ones are bald (Figure 5a, b).

Similar experiments with site-selective adsorption were performed with gold nanoparticles (negatively charged, ZP = -35 mV) on PDMAEMA[quat]/PLMA-Janus particles as well as PNIPAM-PLMA-JPs. In both cases, gold nanoparticles are selectively adsorbed either onto PDMAEMA or PNIPAM side (Figure 5c, d).

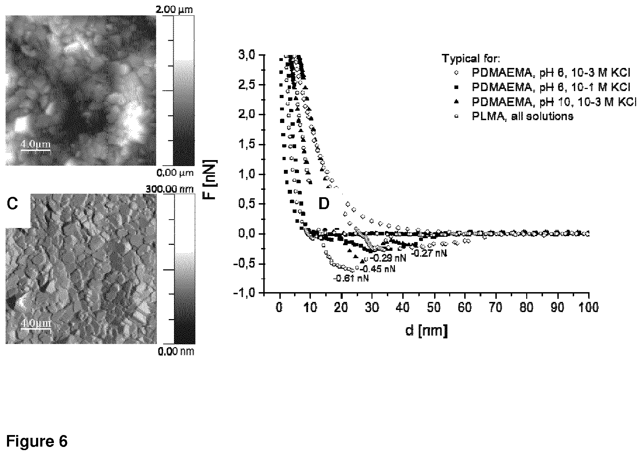

AFM force measurements under water at controlled pH and ionic strength confirm different properties of opposite sides of bi-component Janus particles (Figure 6). The grafted polymers PLMA and PDMAEMA have different adhesive properties. In particular, PDMAEMA is non-adhesive (Figure 6A), while PLMA is strongly adhesive (Figure 6B). We performed test force measurements of about 30 Janus particles adsorbed on silica wafer. It was found that half of them are absolutely non-adhesive and another half are adhesive (adhesion force is ca 0.3-0,5 nN; Figure 6D) that is indication on different properties of opposite sides of Janus particles.

Example 6

Applications of Janus particles

A PGMA film was spincoated from a 2% THF solution at 2000 rpm on a Si wafer to a thickness of the resulting PGMA layer of 80 nm. The PGMA film was annealed at 150°C for 2h. Polymer-modified kaolinite Janus particles ware deposited on the PGMA surface by drying their ethanol dispersion (2 mass %)

The adhesion measurements under water revealed different adhesion properties of Janus-particles layers (Figure 6). The synthesized hairy Janus particles can be further used for the fabrication of materials with controlled adhesion properties and especially anti-fouling materials. By the variation of Janus particle chemical composition and functionality, composite layers with controlled adhesive/non-adhesive behavior could be designed.

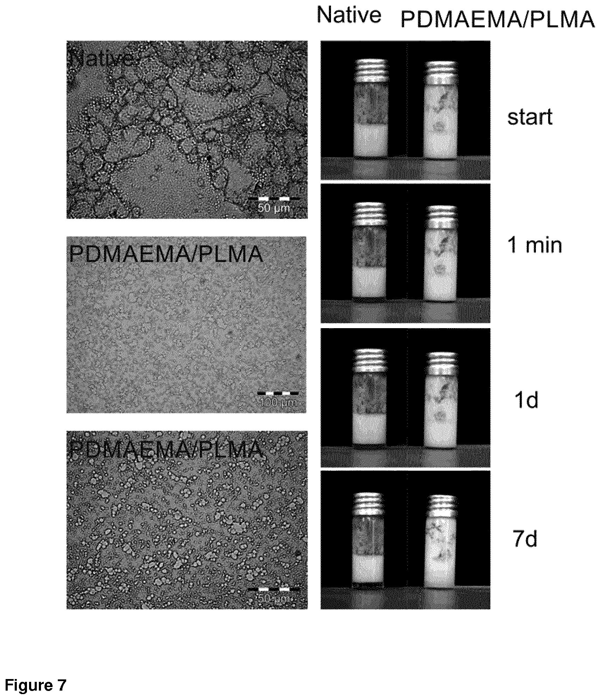

Further, we demonstrated the application of the inventive Janus particles coated with PDMAEMA and PLMA for the stabilization of water-oil emulsions. It was found that liquid droplets stabilized by PDMAEMA-PLMA Janus particles are much smaller than droplets stabilized by unmodified kaolinite. Moreover, the PDMAEMA-PLMA Janus particles are more efficient for stabilization of emulsions than native kaolinite: the emulsion with Janus particles remains stable for 7 days, while the emulsion with native particles starts to separate (Figure 7).

Additionally, a composite blend was prepared from the suspension of PS and PMMA with a ratio of 30:70 in THF solution (1:10) and 5 wt% of polymer-kaolinite Janus particles. The suspension was mixed during 15 min at 13500 rpm using Ultra-Turax. Afterwards, ca. 4 mm thick films were prepared by casting technique. Solvent was evaporated during 24 h in vacuum oven at 70°C.

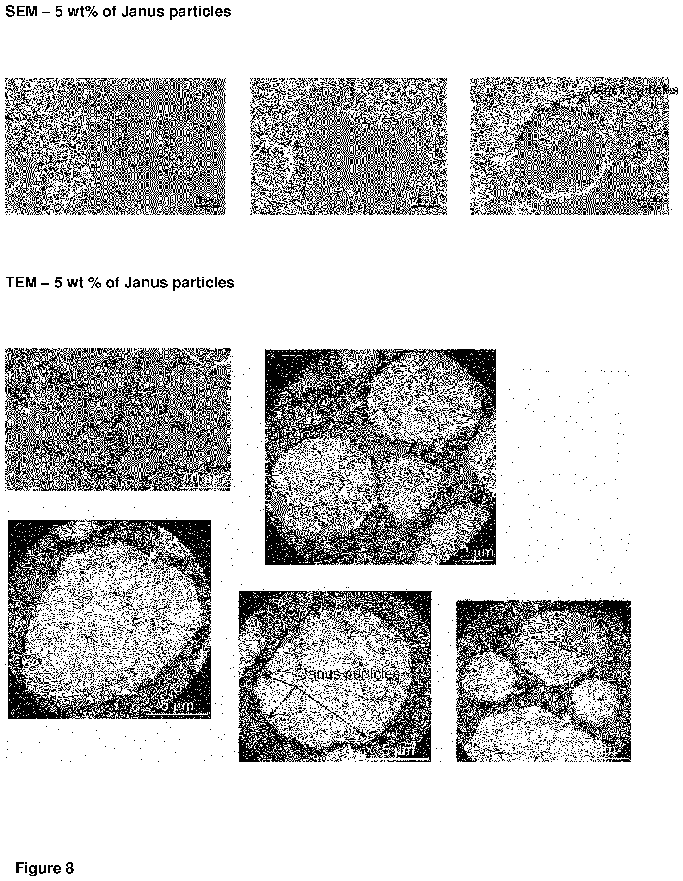

The final film thickness of prepared composite blend was measured to be 400 $\mu$m. The obtained thick film was investigated using SEM (images are shown in Figure 8). The lamellas for TEM investigations were cut from composite kaolinite samples with a Focused Ion Beam (FIB). The film thickness for TEM investigations was 150 nm.

Particles are seen as bright dots around circles in SEM mages and as dark lines in TEM images. The observations show that particles segregate at the interface between the polymers that, as expected, must provide better compatibilization of blends and must reinforce them.

Accordingly, the inventive Janus particles may also be used for the stabilization of polymer blends.

In particular, the inventive Janus particle can be successfully applied for the design of coatings with anti-ice properties. Before the investigation of anti-icing properties of coatings made of Janus particles, electrokinetic as well as wetting properties of the obtained layers were studied. Additionally, the reference surfaces made of one sort of polymer on fully covered particles were investigated.

The prepared coatings consisting of fully covered (as reference sample) and Janus particles were characterized by streaming potential measurements (Fig. 8). The isoelectric point for the PDMAEMA/PLMA Janus particle layer (pH=7.6) was found to be between the isoelectric points for particles fully covered either with PDMAEMA (pH=8.2) or PLMA (pH = 3.7).

This result supports the idea that the coatings made of amphiphilic Janus particles consist of both hydrophobic and hydrophilic patches, resulting in an overall amphiphilic character of the coatings.

The contact angle measurements revealed the chemical heterogeneity of the coatings. The advancing contact angle measured on the coating made of Janus particles is in between the contact angles measured with surfaces of fully covered particles. The receding contact angle measured on the coating made of Janus particles, however, is higher than the angles measured for the fully covered particles (Table 1).

Table 1: Summary of wetting behavior measured on coatings formed of fully covered (FC) PDMAEMA and PLMA as well as Janus (PDMAEMA/PLMA) particles.

| System ID | Advancing contact angle, ° (degrees) | Receding contact angle, ° (degrees) |
|---|---|---|
| PDMAEMA-FC (fully covered) | 69 $\pm$ 1 | 42 $\pm$ 1 |
| PDMAEMA-PLMA-JPs (Janus) | 113 $\pm$ 1 | 67 $\pm$ 1 |
| PLMA-FC (fully covered) | 121 $\pm$ 1 | 54 $\pm$ 1 |

It was furthermore found that the temperature of the beginning of ice formation (freezing point) on hydrophilic surfaces (PEGMA, PDMAEMA) and surfaces made of Janus particles (PEGMA-PDMS and PDMAEMA-PLMA) are substantially lower ($T_{f.p.}$ = - 9.5°C) than that of hydrophobic surfaces ($T_{f.p.}$ = - 1.0°C) (Table).

The experiments were performed in a chamber under controlled temperature and humidity levels (under 80% of relative humidity and temperature range from +20°C to - 20°C, cooling rate 0.5°C).

On the other hand, adhesion of ice to hydrophobic surfaces (PDMS or PLMA) and surfaces made of Janus particles (PEGMA-PDMS and PDMAEMA-PLMA) is similar and clearly lower (about 3 times) then adhesion of the ice to hydrophilic surfaces (PEGMA, PDMAEMA).

## Claims

1. A process for the preparation of Janus particles, comprising the following steps:

   a) treating a core particle with an aminating agent to introduce amino groups on the surface of the core particle,
   b) immobilizing an alkyl halide on the surface of the core particle,
   c) providing a solution A comprising a solvent S1 and a monomer M1 which is soluble in said solvent S1, and a solution B comprising a solvent S2 and a monomer M2 which is soluble in said solvent S2, wherein S1 and S2 are not miscible with each other to form a homogeneous solution,
   d) preparing an emulsion of solution A and solution B with the treated core particle obtained from step b),
   e) initiating the polymerization of monomer M1 at the surface of the core particle facing solvent S1 and of monomer M2 at the surface of the core particle facing solvent S2, wherein polymerization of the monomers occurs by Atom Transfer Radical Polymerization (ATRP), and
f) separation of the Janus particles.

2. The process according to Claim 1, wherein the treated core particle which is added to the emulsion in step d) is localized at the interface of solution A and solution B before step e) is performed.

3. The process according to Claim 1 or 2, wherein the core material has a platelet or disk-like shape and/or wherein the core material is an inorganic material, preferably the core material is kaolinite.

4. The process according to any one of the preceding claims, wherein the value of surface energy of the treated core particle obtained in step b) is between the values for surface energy of solvent S1 and S2 and/or wherein S1 and S2 are different in their degree of hydrophilicity, in particular wherein S1 is more hydrophilic than S2.

5. The process according to any one of the preceding claims, wherein S1 is an aqueous solvent, in particular S1 is water and/or wherein S2 is an organic solvent, in particular S2 is anisole.

6. The process according to any one of the preceding claims, wherein the hydrophilicity of the treated core particle obtained in step b) is between the degree of hydrophilicity of S1 and the degree of hydrophilicity of S2.

7. The process according to any one of the preceding claims, wherein the emulsion obtained in step d) is an oil-in-water emulsion.

8. The process according to any one of the preceding claims, wherein initiating the polymerization of monomer M1 and initiating the polymerization of monomer M2 takes place in the same emulsion.

9. Use of Atom Transfer Radical Polymerization (ATRP) for the preparation of Janus particles,
wherein the Atom Transfer Radical Polymerization (ATRP) of different monomers occurs in the same emulsion at different surfaces of a particle.

**Patentansprüche**

1. Verfahren zur Herstellung von Janus-Teilchen, umfassend die folgenden Schritte:

a) Behandeln eines Kernteilchens mit einem aminierenden Mittel, wobei Aminogruppen auf der Oberfläche des Kernteilchens eingebracht werden,
b) Immobilisieren eines Alkylhalogenids auf der Oberfläche des Kernteilchens,
c) Bereitstellen einer Lösung A, umfassend ein Lösungsmittel S1 und ein Monomer M1, welches in dem Lösungsmittel S1 löslich ist,
und einer Lösung B, umfassend ein Lösungsmittel S2 und ein Monomer M2, welches in dem Lösungsmittel S2 löslich ist,
wobei S1 und S2 nicht miteinander mischbar sind, um eine homogene Lösung zu bilden,
d) Herstellen einer Emulsion von Lösung A und Lösung B mit dem behandelten von Schritt b) erhaltenen Kernteilchen,
e) Initiieren der Polymerisation von Monomer M1 an der Oberfläche des Kernteilchens, welche Lösungsmittel S1 zugewandt ist, und von Monomer M2 an der Oberfläche des Kernteilchens, welche Lösungsmittel S2 zugewandt ist, wobei Polymerisation der Monomere durch Atomübertragungsradikalpolymerisation (ATRP) auftritt, und
f) Abtrennen der Janus-Teilchen.

2. Verfahren gemäß Anspruch 1, wobei das behandelte Kernteilchen, welches zu der Emulsion in Schritt d) gegeben wird, an der Grenzfläche von Lösung A und Lösung B lokalisiert ist, bevor Schritt e) durchgeführt wird.

3. Verfahren gemäß Anspruch 1 oder 2, wobei das Kernmaterial eine plättchen- oder scheibenförmige Form aufweist und/oder wobei das Kernmaterial ein anorganisches Material ist, wobei das Kernmaterial bevorzugt Kaolinit ist.

4. Verfahren gemäß einem der vorhergehenden Ansprüche, wobei der Wert der Oberflächenenergie des behandelten in Schritt b) erhaltenen Kernteilchens zwischen den Werten für die Oberflächenenergie von Lösungsmittel S1 und S2 liegt und/oder wobei S1 und S2 ein unterschiedliches Ausmaß von Hydrophilie aufweisen, wobei insbesondere S1 stärker hydrophil als S2 ist.

5. Verfahren gemäß einem der vorhergehenden Ansprüche, wobei S1 ein wässriges Lösungsmittel ist, wobei insbesondere S1 Wasser ist, und/oder wobei S2 ein organisches Lösungsmittel ist, wobei insbesondere S2 Anisol ist.

6. Verfahren gemäß einem der vorhergehenden Ansprüche, wobei die Hydrophilie des behandelten in Schritt b) erhaltenen Kernteilchens zwischen dem Ausmaß von Hydrophilie von S1 und dem Ausmaß von Hydrophilie von S2 liegt.

7. Verfahren gemäß einem der vorhergehenden Ansprüche, wobei die in Schritt d) erhaltene Emulsion eine Öl-in-Wasser-Emulsion ist.

8. Verfahren gemäß einem der vorhergehenden Ansprüche, wobei Initiieren der Polymerisation von Monomer M1 und Initiieren der Polymerisation von Monomer M2 in derselben Emulsion stattfindet.

9. Verwendung von Atomübertragungsradikalpolymerisation (ATRP) für die Herstellung von Janus-Teilchen, wobei die Atomübertragungsradikalpolymerisation (ATRP) von unterschiedlichen Monomeren in derselben Emulsion an unterschiedlichen Oberflächen eines Teilchens auftritt.

## Revendications

1. Procédé de préparation de particules Janus, comprenant les étapes suivantes, qui consistent :

   a) à traiter une particule centrale avec un agent d'amination pour introduire des groupes amino sur la surface de la particule centrale,
   b) à immobiliser un halogénure d'alkyle sur la surface de la particule centrale,
   c) à fournir une solution A comprenant un solvant S1 et un monomère M1 qui est soluble dans ledit solvant S1, et une solution B comprenant un solvant S2 et un monomère M2 qui est soluble dans ledit solvant S2, dans lequel S1 et S2 ne sont pas miscibles l'un avec l'autre pour former une solution homogène,
   d) à préparer une émulsion de solution A et de solution B avec la particule centrale traitée obtenue de l'étape b),
   e) à initier la polymérisation du monomère M1 au niveau de la surface de la particule centrale faisant face au solvant S1 et du monomère M2 au niveau de la surface de la particule centrale faisant face au solvant S2, où la polymérisation des monomères se produit par Polymérisation Radicalaire par Transfert d'Atomes (ATRP), et
   f) à séparer les particules Janus.

2. Procédé selon la revendication 1, dans lequel la particule centrale traitée qui est ajoutée à l'émulsion dans l'étape d) est localisée à l'interface de la solution A et de la solution B avant que l'étape e) ne soit réalisée.

3. Procédé selon la revendication 1 ou 2, dans lequel le matériau central a une forme de plaquette ou de disque et/ou dans lequel le matériau central est un matériau inorganique, de préférence le matériau central est de la kaolinite.

4. Procédé selon l'une quelconque des revendications précédentes, dans lequel la valeur de l'énergie de surface de la particule centrale traitée obtenue dans l'étape b) est comprise entre les valeurs de l'énergie de surface des solvants S1 et S2 et/ou dans lequel S1 et S2 ont différents degrés d'hydrophilie, en particulier dans lequel S1 est plus hydrophile que S2.

5. Procédé selon l'une quelconque des revendications précédentes, dans lequel S1 est un solvant aqueux, en particulier S1 est de l'eau et/ou dans lequel S2 est un solvant organique, en particulier S2 est de l'anisole.

6. Procédé selon l'une quelconque des revendications précédentes, dans lequel l'hydrophilie de la particule centrale traitée obtenue dans l'étape b) est comprise entre le degré d'hydrophilie de S1 et le degré d'hydrophilie de S2.

7. Procédé selon l'une quelconque des revendications précédentes, dans lequel l'émulsion obtenue dans l'étape d) est une émulsion huile dans l'eau.

8. Procédé selon l'une quelconque des revendications précédentes, dans lequel l'initiation de la polymérisation du monomère M1 et l'initiation de la polymérisation du monomère M2 ont lieu dans la même émulsion.

9. Utilisation de la Polymérisation Radicalaire par Transfert d'Atomes (ATRP) pour la préparation de particules Janus, dans laquelle la Polymérisation Radicalaire par Transfert d'Atomes (ATRP) de différents monomères se produit dans la même émulsion au niveau de différentes surfaces d'une particule.

**Figure 1**

**Figure 2**

Figure 3

Figure 4

Figure 5

Figure 6

Figure 7

**SEM – 5 wt% of Janus particles**

**TEM – 5 wt % of Janus particles**

Figure 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2013050773 A1

### Non-patent literature cited in the description

- **A. WALTHER ; A. H. E. MÜLLER.** *Chem. Rev.,* 2013
- **A. SYNYTSKA ; L. LONOV.** *Particle & Particle Systems Characterization,* 2013
- **S. BERGER ; A. SYNYTSKA ; L. LONOV ; K. J. EICHHORN ; M. STAMM.** *Macromolecules,* 2008, vol. 41, 9669-9676
- **J. HU ; S. ZHOU ; Y. SUN ; X. FANG ; L. WU.** *Chemical Society Reviews,* 2012, vol. 41, 4356-4378
- **F. LIANG ; K. SHEN ; X. QU ; C. ZHANG ; Q. WANG ; J. LI ; J. LIU ; Z. YANG.** *Angewandte Chemie International Edition,* 2011, vol. 50, 2379-2382
- **S. WEISS ; D. HIRSEMANN ; B. BIERSACK ; M. ZIADEH ; A. H. E. MULLER ; J. BREU.** *Polymer,* 2013, vol. 54, 1388-1396
- **S. BERGER et al.** *Macromolecules,* 2008, vol. 41, 9669-9676
- **DAVID B. THIESSEN.** Surface Tension Measurement. CRC Press LLC, 2000
- **HARI SINGH NALWA.** Handbook of Thin Films: Deposition and Processing. Academic Press, 2002
- **KRZYSZTOF MATYJASZEWSKI.** Controlled/Living Radical Polymerization: Progress in ATRP. Oxford Univ Pr, 2009
- **IYER, K. S. et al.** *Macromolecules,* 2003, vol. 36, 6519-6526
- **LONOV, L. et al.** *Langmuir,* 2005, vol. 21, 8711-8716
- **BERGER, S. et al.** *Macromolecules,* 2008, vol. 41, 9669-9676
- *Macromolecules,* 2008, vol. 41, 9669-9676